# EUROPEAN PATENT SPECIFICATION

(11) **EP 1 760 102 B1**
(45) Date of publication and mention of the grant of the patent: **24.04.2013**
(21) Application number: 05751291.5
(22) Date of filing: 06.06.2005
(51) Int. Cl.: C08G 59/68, C08K 9/04, C08L 63/00, C09J 11/04, C09J 11/06, C09J 163/00

(54) **CATIONICALLY PHOTOPOLYMERIZABLE COMPOSITION AND OPTOELECTRONIC COMPONENT USING SAME**
KATIONISCH PHOTOPOLYMERISIERBARE ZUSAMMENSETZUNG UND OPTOELEKTRONISCHES BAUTEIL
COMPOSITION PHOTOPOLYMERISABLE CATIONIQUEMENT ET COMPOSANT OPTOELECTRONIQUE UTILISANT LADITE COMPOSITION

(30) Priority: 17.06.2004 JP 2004179423
(43) Date of publication of application: 07.03.2007
(73) Proprietor: THREE BOND CO., LTD., Hachioji-shi Tokyo 193-8533 (JP)
(72) Inventor: KOJIMA, Kazuhiro, c/o THREE BOND CO., LTD., Hachioji-shi, Tokyo 1938533 (JP)
(74) Representative: Curtis, Philip Anthony
(86) International application number: PCT/JP2005/010329
(87) International publication number: WO 2005/123803

(56) References cited:
- JP-A- 11 315 132
- JP-A- 2000 026 577
- JP-A- 2002 069 269
- US-A- 5 726 216
- US-A- 5 935 661
- DATABASE WPI Week 199826 Derwent Publications Ltd., London, GB; AN 1998-292380 XP002436743 & JP 10 102026 A (SUMITOMO BAKELITE CO LTD) 21 April 1998 (1998-04-21)

## Description

### Technical Field

The present invention relates to a cationically photopolymerizable composition using a cationically polymerizable compound, and an optoelectronic component fabricated by using the cationically photopolymerizable composition.

### Background Art

A cationically photopolymerizable composition that initiates cationic polymerization by light irradiation is known to have such advantages that the concerned composition is not affected by oxygen, can be subjected to effective postcure by heating after light irradiation, and permits polymerization of various monomers. Incidentally, Crivello summarized the cationic photopolymerization as a review article (J. V. Crivello: Advances in Polymer Science, Vol. 62, 1, 1984); as a polymerization initiator for cationic photopolymerization, a photo-acid generator is usually used. As for the photo-acid generator, onium slats such as aromatic iodonium salts and aromatic sulfonium salts have been mainly used as industrial materials. On the other hand, a large number of sensitizers that are used in combination with the photo-acid generator and thereby accelerate cationic photopolymerization have been reported in compliance with the type of the initiator; examples of such a sensitizer may include dyes such as acridine orange, acridine yellow, benzoflavine and setoflavine T; aromatic compounds such as perylene, pyrene, anthracene, phenothiazine, 1,2-benzanthracene and coronene; and aromatic carbonyl compounds such as thioxanthone, fluorenone, benzophenone and anthraquinone.

On the other hand, examples of conventional optoelectronic components include optical components such as optical pickups for CDs and DVDs, and optical system housings (bases) for copying machines and laser beam printers (LBPs), and such conventional components have been manufactured by die-casting of metals such as magnesium, aluminum, zinc and alloys thereof. However, recently the demand for cost and weight reduction has grown, and accordingly the manufacturing of these components from resins has come under study to result in gradual replacement of the conventional components with the components made from resins. In this connection, the resin materials concerned are required to have properties, appropriate according to the functions of individual optical components, such as the dimensional accuracy and dimensional stability at the time of molding (injection molding), the moldability (fluidity), the mechanical strength, the rigidity and the resistances to the environment (heat, temperature, chemicals and the like). As for such optical components made from resins, among these properties, recently the dimensional stability, in particular, the reduction of the optical axis deviation of the optical system against the variations of the environment (temperature, humidity and the like) has been prominently required; in particular, such properties have been strictly required for the memory density enhancement and/or the processing speed enhancement in CD, DVD and the like, or for development of high speed color printing machines and high speed color LBPs.

Additionally, such optical pickups and optical system housings are constituted with a large number of optical components such as laser diodes, half mirrors and photodetectors, adhesives being used for assembling these components. In particular, in the adhesion to secure laser diodes, photodetectors and the like, a high level performance of accurate securing has been required. Accordingly, for any of these components, a high adhesiveness and a high dimensional stability have come to be required at high temperatures, low temperatures and/or high humidities.

As adhesives applicable to the above-mentioned optoelectronic components, various photocurable adhesives have been developed. Japanese Patent Laid-Open No. 2004-10674 has proposed a photocurable epoxy resin in which an epoxy compound having a naphthalene skeleton and a resorcinolic epoxy compound are used in combination, but has not mentioned any photopolymerization initiator, and has not investigated the addition of any additives such as a filler, thus the photocurable epoxy resin being insufficient as an adhesive for accurate securing. Japanese Patent Laid-Open No. 2003-138005 aims at the adhesiveness improvement by blending a particular oxetane monomer, but has nothing to do with the accurate securing according to the present invention. Additionally, Japanese Patent Laid-Open No. 2000-76405 describes that glass cut fiber may be added for the purpose of imparting toughness, but no remark has been made on the properties and the shape of such a glass fiber. Further, National Publication of International Patent Application Nos. 2001-520758 and 2001-520759 have mentioned a simultaneous use of an iodonium salt and camphorquinone, but no description is found on the combination of the initiators associated with the present invention, and on hydroxy group-containing substances, there is found no such specific description as presented in the present description.
Patent Document 1: Japanese Patent Laid-Open No. 2004-10674
Patent Document 2: Japanese Patent Laid-Open No. 2003-138005
Patent Document 3: Japanese Patent Laid-Open No. 2000-76405
Patent Document 4 : National Publication of International Patent Application No.2001-520758
Patent Document 5: National Publication of International Patent Application No. 2001-520759
Non-patent Document 1: J. V. Crivello: Advances in Polymer Science, Vol. 62, 1, 1984.

### Disclosure of the Invention

### Problems to be Solved by the Invention

It is an object of the present invention to provide, for the purpose of solving the above-mentioned problems, a cationically photopolymerizable composition suitably usable for use in an optoelectronic component, in particular, a cationically photopolymerizable composition capable of attaining a high adhesiveness and a high dimensional stability at high temperatures, low temperatures and/or high humidities.

### Means for Solving the Problems

The present invention has been achieved by discovering, as a result of a diligent study to solve the above-mentioned problems, that a cationically photopolymerizable composition comprising as the main components thereof the following (A) to (D) provides an adhesive excellent in durability, adhesiveness, particularly in accurate securing performance, and extremely small in displacement with respect to the dimensional stability after curing, and by being based on the fact that the design to improve the curing rate is feasible:
(A) 100 parts by weight of a cationically polymerizable compound comprising 5% or more by weight of a hydrogenated bisphenolic epoxy resin;
(B) 0.01 to 10 parts by weight of one or more iodonium salts represented by the following formula (1),

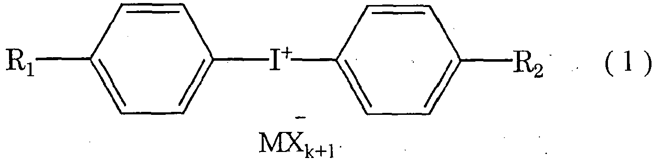

wherein R₁ and R₂ each are a hydrogen atom, an alkyl group having 1 to 18 carbon atoms or an alkoxy group having 1 to 18 carbon atoms; M is a metal and preferably phosphorus; X is a halogen atom and preferably a fluorine atom; and k represents the valency of the metal;
(C) 0.01 to 10 parts by weight of one or more benzoyl compounds having any of the structures represented by the following general formulas (2), (3) and (4),

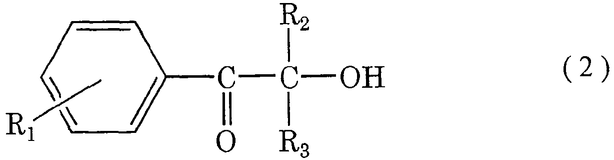

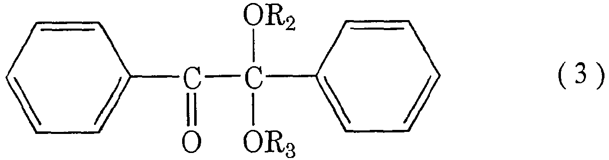

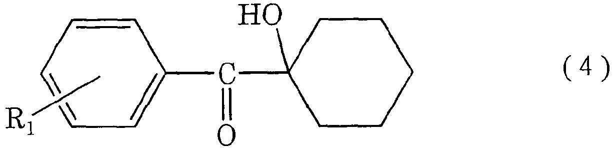

wherein R₁ represents a hydrogen atom, a methyl group, an ethyl group, an alkyl group having 3 or more carbon atoms, a hydroxy group, a hydroxymethoxy group, a hydroxyethoxy group or a hydroxyalkoxy group having 3 or more carbon atoms; R₂ and R₃ each represent a methyl group, an ethyl group or an alkyl group having 3 or more carbon atoms; and
(D) 10 to 90 parts by weight of a glass fiber having a fiber length of 1 to 500 µm and a fiber diameter of 0.5 to 100 µm.

The cationically photopolymerizable compound of the present invention contains a hydrogenated bisphenolic epoxy resin represented by the following formula (5) in a content of 5% or more, preferably 20% or more, furthermore preferably 50% or more by weight in the whole cationically photopolymerizable compound. In the present invention, the hydrogenated bisphenolic epoxy resin may exclusively account for the total amount of the whole cationically photopolymerizable compound. When the content of the hydrogenated bisphenolic epoxy resin is less than 5% by weight, the reaction is made extremely slow and the reaction does not proceed to a sufficient extent to cause the degradation of the performance intrinsic to the cured article. In the present invention, for the purpose of improving or controlling the properties of the composition and the physical properties after curing thereof, another cationically polymerizable compound may be used simultaneously. For example, when a non-hydrogenated epoxy resin is used simultaneously in order to the adhesiveness, the addition amount thereof may be set at 5 to 20% by weight of the amount of the whole cationically photopolymerizable compound.
Additionally, it is needless to say possible to use a hydrogenated bisphenolic epoxy resin other than that represented by the following structure. It may be mentioned that the hydrogenated species is preferable because it improves the weatherability and resistance to discoloration.

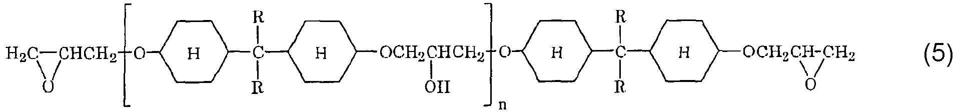

wherein n is 0 or an integer of 1 to 10, R represents a hydrogen atom or a methyl group, and the Rs in the formula may be the same or different from each other.
Among the cationically photopolymerizable compounds of the present invention, those compounds other than the hydrogenated bisphenolic epoxy resins represented by the above structural formula (5) may be represented by the following individual compounds listed as examples. These compounds may be used each alone or as mixtures of two or more thereof.

Examples of such compounds may include epoxy resin, epoxynovolac resin, vinyl monomers, vinyl prepolymers, cyclic ethers (inclusive of oxetane compounds), cyclic esters, cyclic sulfides, cyclic amines and cyclic organosilicon compounds; specific examples of the epoxy resin may include any monomer, any dimmer, any prepolymer and any polymer each containing one or more glycidyl groups; and more specific examples of the epoxy resin may include a bisphenol A epoxy resin, a bisphenol F epoxy resin and an alicyclic epoxy resin. Additionally, when a chlorine-based ion-containing resin such as an epoxy resin synthesized by using epichlorohydrine is used, it is preferable to add such a resin purified by distillation, and it is preferable to make the concentration of the hydrolyzable chloride ion as low as possible.

The cationically photopolymerizable composition of the present invention may include a compound having at least two hydroxy group in one molecule thereof for the purpose of regulating the curing rate and further enhancing the adhesivity. As the compound having at least two hydroxy groups in one molecule thereof, preferable is a compound that has no acidic group other than phenolic hydroxy groups; examples of such a compound may include a polyol compound having no functional groups other than alcoholic hydroxy groups, a polyesterpolyol compound, a polycaprolactone polyol compound, a polyol compound having phenolic hydroxy groups, and a polycarbonatepolyol such as a polycarbonatediol.

Examples of the polyol compounds having no functional groups other than alcoholic hydroxy groups may include: aliphatic polyols such as ethylene glycol, propylene glycol, 1,4-butadienediol, 1,3-butadienediol, 1,9-nonanediol, neopentylglycol, tricyclodecanedimethylol, cyclohexanedimethylol, trimethylolpropane, glycerin, hydrogenated polybutadienediol and a hydrogenated dimer diol; and (poly)ether polyols having one or more ether bonds such as diethylene glycol, tripropylene glycol, polyethylene glycol, polypropylene glycol, polytetramethylene glycol, trimethylolpropane polyethoxytriol, glycerin polypropoxytriol, bisphenol A polyethoxydiol, bisphenol F polyethoxydiol, and ditrimethylol propane.

Examples of the above-mentioned polyester polyols may include the products of the reactions of the above-mentioned polyol compounds having no functional groups other than alcoholic hydroxy groups and the above-mentioned polycarbonate polyols with polybasic acids (such as maleic acid, succinic acid, adipic acid, terephthalic acid, isophthalic acid, and a hydrogenated dimer acid) or the anhydrides of these acids.

Examples of the above-mentioned polycaprolactone polyols may include: the products of the reactions of the above-mentioned polyol compounds having no functional groups other than alcoholic hydroxy groups and the above-mentioned polycarbonate polyols with ε-caprolactone; or the products of the reactions of the above-mentioned polyol compounds having no functional groups other than alcoholic hydroxy groups and the above-mentioned polycarbonate polyols with the above-mentioned polybasic acids or the anhydrides thereof and with ε-caprolactone. Examples of the polyol compounds having phenolic hydroxy groups may include compounds having at least two hydroxy groups in one molecule thereof such as bisphenol F, phenol novolac and cresol novolac.

Examples of the more preferable compounds among these components may include, in consideration of the temporal stability (pot life), polyol compounds (D-1) having no functional groups other than alcoholic hydroxy groups and polyols having no acidic groups such as polycaprolactone polyol compounds. Preferred among the polyol compounds having no functional groups other than alcoholic hydroxy groups are polyether polyols each having two or more ether groups in one molecule thereof. Preferred among polycaprolactone polyol compounds are the products of the reaction of polyol compounds having no functional groups other than alcoholic hydroxy groups with ε-caprolactone. Examples of furthermore preferable compounds may include polytetramethylene glycol, polycaprolactone diol, and polycaprolactone triol. Additionally, examples of the lactone compounds may include ε-caprolactone and γ-butyrolactone. The content of each of these polyols is 0.5 to 50 parts by weight and more preferably 5 to 20 parts by weight in relation to the whole cationically photopolymerizable compound. When this content is less than 0.5 part by weight, the adhesiveness is not improved. When this content exceeds 50 parts by weight, the reaction is made extremely slow and the reaction does not proceed to a sufficient extent to cause the degradation of the performance intrinsic to the cured article.

As the cationic photopolymerization initiator (B) to be used in the present invention, an iodonium salt represented by following formula (6) can be preferably used; however, the simultaneous use of other cationic photopolymerization initiators such as sulfonium cationic photopolymerization initiators is not inhibited.

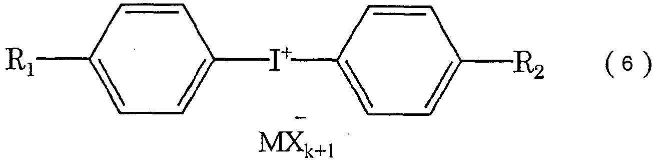

wherein R₁ and R₂ each are a hydrogen atom, an alkyl group having 1 to 18 carbon atoms or an alkoxy group having 1 to 18 carbon atoms; M is a metal and preferably phosphorus; X is a halogen atom and preferably a fluorine atom; and k represents the valency of the metal.

Specific examples of the above-mentioned iodonium cationic photopolymerization initiators may include the following compounds: diphenyliodonium hexafluorophosphate, diphenyliodonium hexafluoroanitmonate, diphenyliodonium tetrafluoroborate, diphenyliodonium tetrakis(pentafluorophenyl)borate, bis(dodecylphenyl)iodonium hexafluorophosphate, bis(dodecylphenyl)iodonium hexafluoroantimonate, bis(dodecylphenyl)iodonium tetrafluoroborate, bis(dodecylphenyl)iodonium tetrakis(pentafluorophenyl)borate, 4-methylphenyl-4-(1-methylethyl)phenyliodonium hexafluorophosphate, 4-methylphenyl-4-(1-methylethyl)phenyliodonium hexafluoroantimonate, 4-methylphenyl-4-(1-methylethyl)phenyliodonium tetrafluoroborate, 4-methylphenyl-4-(1-methylethyl)phenyliodonium tetrakis(pentafluorophenyl)borate, 4-methoxydiphenyliodonium hexafluorophosphate, bis(4-methylphenyl)iodonium hexafluorophosphate, bis(4-tert-butylphenyl)iodonium hexafluorophosphate, bis(dodecylphenyl)iodonium, and tolylcumyliodonium hexafluorophosphate.

The proportion of the above-mentioned iodonium cationic polymerization initiator only has to be an addition amount enough to serve as a photopolymerization initiator (catalyst) and to impart the photocurability. The range of the proportion is from 0.01 to 10.0 parts by weight to fall in an appropriate range and more preferably from 0.1 to 5.0 parts by weight per approximately 100 parts by weight of the total amount of the cationically photopolymerizable compounds. When the proportion is less than 0.01 part by weight, the reaction is made extremely slow and the reaction does not proceed to a sufficient extent. When the proportion exceeds 10.0 parts by weight, the physical properties intrinsic to the resin cannot be attained to cause the performance degradation of the resin, degrading the liquid storage stability prior to curing as the case may be. It is to be noted that the iodonium cationic photopolymerization initiator is appropriately designed to be used according to the types, the proportions, the intended application or the like of the combined cationic polymerizable compounds.
Additionally, as the benzoyl compound (C) to be used in the present invention, the organic compounds represented by the following general formulas (7), (8) and (9) may be cited:

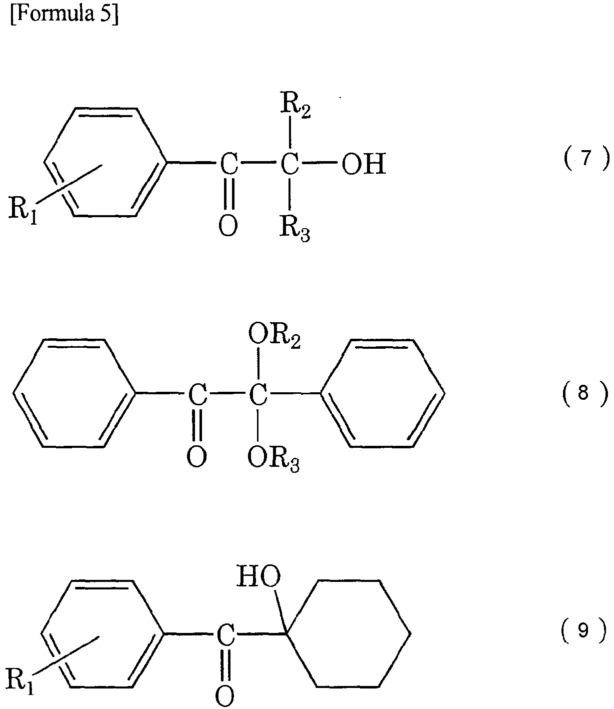

wherein R₁ represents a hydrogen atom, a methyl group, an ethyl group, an alkyl group having 3 or more carbon atoms, a hydroxy group, a hydroxymethoxy group, a hydroxyethoxy group or a hydroxyalkoxy group having 3 or more carbon atoms; R₂ and R₃ each represent a methyl group, an ethyl group or an alkyl group having 3 or more carbon atoms.

7 Specific examples of the compound represented by the general formula (7) may include: 2-hydroxy-2-methyl-1-phenylpropan-1-one, 2-hydroxy-2-methyl-1-phenylbutan-1-one, 2-ethyl-2-hydroxy-1-phenylbutan-1-one, 1-(4-methylphenyl)-2-hydroxy-2-methylpropan-1-one, 1-(4-methylphenyl)-2-hydroxy-2-methylbutan-1-one, 1-(4-methylphenyl)-2-ethyl-2-hydroxybutan-1-one, 1-(4-ethylphenyl)-2-hydroxy-2-methylpropan-1-one, 1-(4-ethylphenyl)-2-hydroxy-2-methylbutan-1-one, 1-(4-ethylphenyl)-2-ethyl-2-hydroxybutan-1-one, 1-(4-propylphenyl)-2-hydroxy-2-methylpropan-1-one, 1-(4-propylphenyl)-2-hydroxy-2-methylbutan-1-one, 1-(4-propylphenyl)-2-ethyl-2-hydroxybutan-1-one, 1-(4-isopropylphenyl)-2-hydroxy-2-methylpropan-1-one, 1-(4-isopropylphenyl)-2-hydroxy-2-methylbutan-1-one, and 1-(4-isopropylphenyl)-2-ethyl-2-hydroxybutan- 1-one.

Specific examples of the compound represented by the general formula (8) may include: 2,2-dimethoxy-1,2-diphenylethanone, 2-ethoxy-2-methoxy-1,2-diphenylethanone, and 2,2-diethoxy-1,2-diphenylethanone.

Specific examples of the compound represented by the general formula (9) may include: 1-hydroxycyclohexyl-phenylmethanone, 1-hydroxycyclohexyl-4-methylphenylmethanone, 4-ethylphenyl-1-hydroxycyclohexylmethanone, and 1-hydroxycyclohexyl-4-isopropylphenylmethanone.

The above-mentioned benzoyl compound is added for purpose of aiding the operation of the photopolymerization initiator (B). The addition amount of the benzoyl compound is from 0.01 to 10.0 parts by weight to fall in an appropriate range and more preferably from 0.1 to 5.0 parts by weight. When the addition amount is less than 0.01 part by weight, the addition amount is too small to enhance the activity of the photopolymerization initiator (B), and consequently there occurs a problem such that the reaction is made extremely slow or the reaction does not proceed to a sufficient extent. On the contrary, when the addition amount exceeds 10.0 parts by weight, no advantageous effect as a catalyst can be obtained, and additionally, the performance degradation of the cured article is caused, or the degradation of the liquid storage stability prior to curing is caused. It is to be noted that the benzoyl compound is also appropriately designed to be used according to the types, the proportions, the intended application or the like of the combined cationic polymerizable compounds, similarly to the iodonium cationic photopolymerization initiator.

The glass fiber (D) to be used in the present invention is preferably a milled fiber (powdery), and particularly preferably a milled fiber the moisture content of which is constrained to fall within a range of 5% or less not to inhibit the cationic photopolymerization. Additionally, the fiber length and the fiber diameter of the glass fiber are 1 to 500 µm and 0.5 to 100 µm, respectively, and are more preferably 5 to 100 µm and 1 to 20 µm, respectively. This glass fiber is preferably surface treated with a silane compound having a vinyl group, an epoxy group, an amino group, a (meth)acryl group, a mercapto group, a methoxy group, an ethoxy group or the like.
Additionally, the glass fiber may be added in a proportion of 10 to 90 parts by weight and further preferably 20 to 70 parts by weight, in 100 parts by weight of the cationically polymerizable compound(s). When the proportion is less than 10 parts by weight, the coefficient of linear expansion is increased to result in lack of accuracy. When the proportion exceeds 90 parts by weight, the adhesiveness tends to be degraded.

### Advantages of the Invention

The present invention enables accurate adhesion high in positional accuracy and dimensional accuracy in the assembling of so-called optical system components such as optical pickups and optical housings. In particular, the present invention attains a high level performance of accurate securing in the adhesion to secure laser diodes, photodetectors and the like to be mounted in components such as optical pickups. Additionally, this accurate adhesiveness displays performances such as accurate adhesion and adhesion durability in various harsh environments.
Hereinafter, the present invention is described further specifically on the basis of Examples and Comparative Examples, but the present invention is not limited to these Examples.

### Examples

### (Preparation)

In a preparation vessel shielded all around from light, the cationically photopolymerizable compounds, the cationic photopolymerization initiators, the benzoyl compounds and the polyol compounds, each in a predetermined amount shown in Table 1 or Table 2, were mixed under agitation while heating to 50°C to yield a prepared liquid. It is to be noted that all the blending amounts shown in these tables are given in parts by weight. Successively, in the prepared liquid, a fibrous glass filler and/or a spherical glass filler was further mixed under agitation, and thereafter the prepared liquid was defoamed under a reduced pressure to prepare a targeted cationically photopolymerizable composition (Examples 1 to 11, Comparative Examples 1 to 10).

### (Test Methods)

### • On adhesiveness test

On a die-cast zinc specimen (JIS H 5301), the prepared adhesive was coated, and a glass test plate was bonded thereon, ultraviolet light was irradiated from the glass plate side for 10 seconds (accumulated light quantity: approximately 3000 mJ/cm²) to adhesively cure the specimen, and thereafter the specimen was allowed to stand for approximately 2 hours to make an evaluation specimen. The specimen thus obtained was subjected to a measurement of the adhesive shear strength on the basis of JIS K 6850 (three bond standard 3TS-301-13).

### • Coatability

The prepared adhesive was filled in a syringe, and was dispensed from a nozzle having a size of 20G. In this dispensing operation, the flowability was visually examined to evaluate the coatability. The results obtained were presented in terms of the following standards:
○: Satisfactory flowability;
× : Unsatisfactory flowability

### • Photocurability (Surface)

The prepared adhesive was coated on a glass plate and irradiated with ultraviolet light for 10 seconds (accumulated light quantity: approximately 3000 mJ/cm²), and immediately thereafter the surface tack was evaluated by finger touch. The results obtained were presented in terms of the following standards:
Ⓞ: No tack was found, and lubricity was found.
○: No tack was found.
×: Tack was found.

### • Photocurability (Deep portion: mm)

The prepared adhesive was filled in a light-shielded plastic cylinder (inside diameter: φ5 mm; t: 10 mm) and irradiated with ultraviolet light for 10 seconds (accumulated light quantity: approximately 3000 mJ/cm²), and immediately thereafter the deep-portion curing distance was measured.

The evaluation was made by measuring the curing depth in mm units, and by rounding the obtained depth to the nearest whole number.

### • On the dimensional stability test

The linear expansion coefficient of a photocured article was measured, and the α1 (prior to Tg) value was measured in conformity with JIS K 6850 (three bond standard: 3TS-501-05).

The results of the above-mentioned individual tests are collected in Table 1 (Examples) and Table 2 (Comparative Examples).

[Table 1]

**Table 1**

| Photocurable adhesive | Example No. | | | | | | | | | | |
|---|---|---|---|---|---|---|---|---|---|---|---|
| Components | 1 | 2 | 3 | 4 | 5 | 6 | 7 | 8 | 9 | 10 | 11 |
| Hydrogenated Bis-A (n=0) | 50 | 20 | 80 | 50 | 5 | 49.5 | 30 | 40 | 45 | | 50 |
| Hydrogenated Bis-A (n=0.5) | | | | | | | | | | 45 | |
| EP-830 | | | | | 45 | | | | | | |
| Polycaprolactone triol | | | | | | 0.5 | 20 | 10 | 5 | 5 | |
| t-BuDBI | 1 | 0.4 | 1.6 | 1 | 1 | 1 | 1 | 1 | 1 | 1 | |
| PI-2074 | | | | | | | | | | | 1 |
| Dalocure 1173 | 1 | 0.4 | 1.6 | | 1 | 1 | 1 | 1 | 1 | 1 | 1 |
| Irgacure 184 | | | | 1 | | | | | | | |
| Glass fiber (30 µm) PFE-301S | 50 | 80 | 20 | 50 | 50 | 50 | 50 | 50 | 50 | 50 | 50 |

| Adhesiveness (Mpa) | 7 | 5 | 8 | 7 | 8 | 9 | 11 | 10 | 10 | 10 | 5 |
|---|---|---|---|---|---|---|---|---|---|---|---|
| Coatability | ○ | ○ | ○ | ○ | ○ | ○ | ○ | ○ | ○ | ○ | ○ |
| Photocurability (Surface) | Ⓞ | Ⓞ | Ⓞ | Ⓞ | ○ | Ⓞ | ○ | ○ | ○ | Ⓞ | Ⓞ |
| Photocurability (Deep portion: mm) | 4 | 3 | 5 | 4 | 3 | 4 | 2 | 4 | 4 | 4 | 4 |
| Dimensional stability (ppm) | 30 | 20 | 20 | 30 | 30 | 30 | 40 | 35 | 35 | 30 | 30 |

| | | | | | | | | | | | |
|---|---|---|---|---|---|---|---|---|---|---|---|
| * For glass fiber, the fiber length is shown. | | | | | | | | | | | |

[Table 2]

**Table 2**

| Photocurable adhesive | Comparative Example No. | | | | | | | | | |
|---|---|---|---|---|---|---|---|---|---|---|
| Components | 1 | 2 | 3 | 4 | 5 | 6 | 7 | 8 | 9 | 10 |
| Hydrogenated Bis-A (n=0) | 1 | 50 | 50 | 50 | 100 | 5 | 50 | 50 | 50 | 40 |
| EP-830 | 50 | | | | | | | | | |
| Polycaprolactone triol | | | | | | | | | | |
| Polytetramethylene ether glycol | | | | | | | | | | 10 |
| t-BuDBI | 1 | | 1 | 1 | 1 | 1 | 1 | | | 1 |
| UVI- 6992 | | 1 | | | | | | | 1 | |
| PI-2074 | | | | | | | | 1 | | |
| Dalocure 1173 | 1 | 1 | | | 1 | | 1 | 1 | | |
| Irgacure 184 | | | | | | | | | | 1 |
| Benzophenone | | | | 1 | | | | | | |
| Glass fiber (30 µm) PFE-301S | 50 | 50 | 50 | 50 | 5 | 95 | | | 50 | 50 |
| Glass fiber (1 mm) CS3PE-332S | | | | | | | 50 | | | |
| Glass bead (28 µm) Crystallite A2 | | | | | | | | 50 | | |
| Adhesiveness (Mpa) | 7 | 2 | 5 | 4 | 7 | 2 | 7 | 3 | 3 | 3 |
| Coatability | ○ | ○ | ○ | ○ | ○ | × | × | ○ | ○ | ○ |
| Photocurability (Surface) | × | × | × | × | ○ | × | ○ | ○ | × | × |
| Photocurability (Deep portion: mm) | 3 | 3 | 2 | 2 | 3 | 1 | 3 | 3 | 1 | 3 |
| Dimensional stability (ppm) | 40 | 70 | 80 | 90 | 110 | 70 | 40 | 90 | 100 | 90 |

| | | | | | | | | | | |
|---|---|---|---|---|---|---|---|---|---|---|
| * For glass fiber, the fiber length is shown. | | | | | | | | | | |

In above Tables 1 and 2, the abbreviations and the trade names mean the following:

### <Epoxy resins>

Hydrogenated Bis-A (n=0) means a hydrogenated epoxy resin in which the compounds containing 0 to 3 (for the main component, n=0) of the repeating units represented by the above described structural formula (5) were used.
Hydrogenated Bis-A (n=0.5) means a hydrogenated epoxy resin in which the compounds containing 0 to 8 (for the main component, n=0) of the repeating units represented by the above described structural formula (5) were used.
"EP-830": A bisphenol F epoxy resin manufactured by Japan Epoxy Resin Co., Ltd.

### <Cationic Photopolymerization Initiators>

"t-BuDBI": tert-Butyldiphenyliodonium hexafluorophosphate manufactured by Dow Chemical Co.
"UVI-6992": Triallylsulfonium hexafluorophosphate manufactured by Dow Chemical Co.
"PI-2074": Tolylcumyliodonium tetrakis(pentafluorophenyl)borate manufactured by Rhodia Japan, Ltd.
"Dalocure 1173": 2-Hydroxy-2-methyl-1-phenyl-propan-1-one manufactured by Chiba Specialty Chemicals Ltd.
"Irgacure 184": 1-Hydorxy-cyclohexyl-phenyl-ketone manufactured by Chiba Specialty Chemicals Ltd.
"PFE-301S": Milled fiber manufactured by Nitto Boseki Co., Ltd.
"CS3PE-3325": Chopped strand manufactured by Nitto Boseki Co., Ltd.
"Crystallite A2": Glass bead manufactured by Tatsumori Co. Ltd.

### Industrial Applicability

The cationically photopolymerizable composition of the present invention is useful when molding optical components such as optical pickups for CDs and DVDs as optoelectronic components, and optical system housings (bases) for copying machines and laser beam printers (LBPs), and is also useful for adhesive sealing of such components.

## Claims

1. A cationically photopolymerizable composition comprising as the main components thereof the following (A) to (D):
(A) 100 parts by weight of a cationically polymerizable compound comprising 5% or more by weight of a hydrogenated bisphenolic epoxy resin;
(B) 0.01 to 10 parts by weight of one or more iodonium salts represented by the following formula (1), 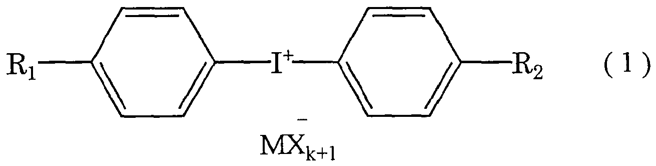 wherein R₁ and R₂ each are a hydrogen atom, an alkyl group having 1 to 18 carbon atoms or an alkoxy group having 1 to 18 carbon atoms; M is a metal and preferably phosphorus; X is a halogen atom and preferably a fluorine atom; and k represents the valency of the metal;
(C) 0.01 to 10 parts by weight of one or more benzoyl compounds having any of the structures represented by the following general formulas (2), (3) and (4), 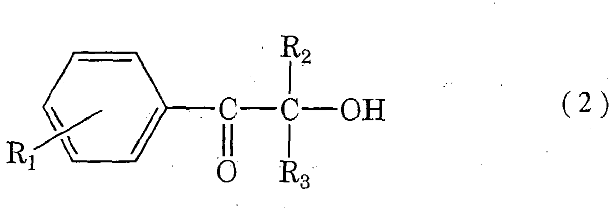 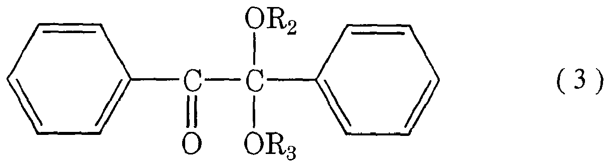 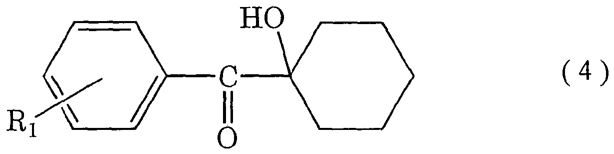 wherein R₁ represents a hydrogen atom, a methyl group, an ethyl group, an alkyl group having 3 or more carbon atoms, a hydroxy group, a hydroxymethoxy group, a hydroxyethoxy group or a hydroxyalkoxy group having 3 or more carbon atoms; R₂ and R₃ each represent a methyl group, an ethyl group or an alkyl group having 3 or more carbon atoms; and
(D) 10 to 90 parts by weight of a glass fiber having a fiber length of 1 to 500 µm and a fiber diameter of 0.5 to 100 µm.

2. The cationically photopolymerizable composition according to claim 1, in which the hydrogenated bisphenolic epoxy resin is represented by the following formula (5): 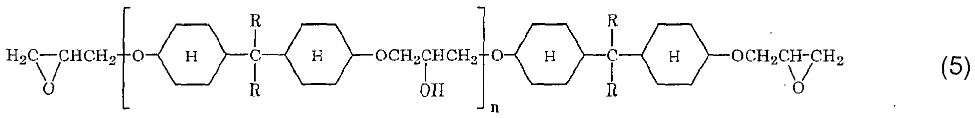 wherein n is 0 or an integer of 1 to 10, R represents a hydrogen atom or a methyl group, and the Rs in the formula (5) may be the same or different from each other.

3. The cationically photopolymerizable composition according to claim 1, in which the glass fiber (D) has a fiber length of 5 to 100 µm and a fiber diameter of 1 to 20 µm.

4. The cationically photopolymerizable composition according to claim 1, in which the glass fiber (D) is surface treated with a silane compound having a vinyl group, an epoxy group, an amino group, a (meth)acrylic group, a mercapto group, a methoxy group or an ethoxy group.

5. The cationically photopolymerizable composition according to claim 1, further comprising 0.5 to 50 parts by weight of a polyol having at least 2 hydroxy groups in one molecule thereof in relation to 100 parts by weight of the cationically polymerizable compound (A).

## Patentansprüche

1. Kationisch photopolymerisierbare Zusammensetzung, die als ihre Hauptbestandteile die folgenden Bestandteile (A) bis (D) umfasst:
(A) 100 Gewichtsteile einer kationisch polymerisierbaren Verbindung, die 5 Gew.-% oder mehr eines hydrierten Bisphenol-Epoxidharzes umfasst;
(B) 0,01 bis 10 Gewichtsteile eines oder mehrerer Iodoniumsalze, die durch die folgende Formel (1) dargestellt sind: 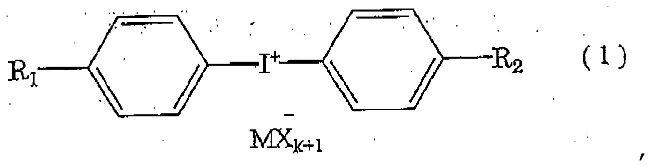 wobei R₁ und R₂ jeweils ein Wasserstoffatom, eine Alkylgruppe mit 1 bis 18 Kohlenstoffatomen oder eine Alkoxygruppe mit 1 bis 18 Kohlenstoffatomen sind; M ein Metall und vorzugsweise Phosphor ist; X ein Halogenatom und vorzugsweise ein Fluoratom ist und k für die Wertigkeit des Metalls steht;
(C) 0,01 bis 10 Gewichtsteile einer oder mehrerer Benzoylverbindungen mit einer beliebigen der Strukturen, die durch die folgenden allgemeinen Formeln (2), (3) und (4) dargestellt sind: 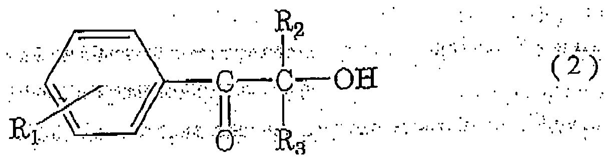 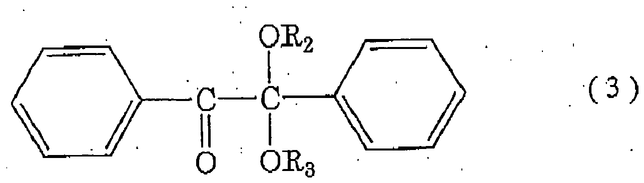 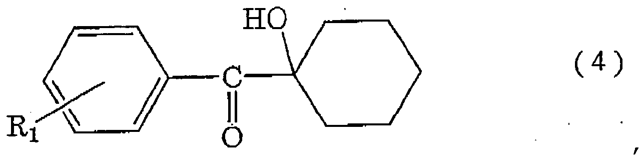 wobei R₁ für ein Wasserstoffatom, eine Methylgruppe, eine Ethylgruppe, eine Alkylgruppe mit 3 oder mehr Kohlenstoffatomen, eine Hydroxygruppe, eine Hydroxymethoxygruppe, eine Hydroxyethoxygruppe oder eine Hydroxyalkoxygruppe mit 3 oder mehr Kohlenstoffatomen steht; R₂ und R₃ jeweils für eine Methylgruppe, eine Ethylgruppe oder eine Alkylgruppe mit 3 oder mehr Kohlenstoffatomen stehen; und
(D) 10 bis 90 Gewichtsteile einer Glasfaser mit einer Faserlänge von 1 bis 500 µm und einem Faserdurchmesser von 0,5 bis 100 µm.

2. Kationisch photopolymerisierbare Zusammensetzung nach Anspruch 1, wobei das hydrierte Bisphenol-Epoxidharz durch die folgende Formel (5) dargestellt ist: 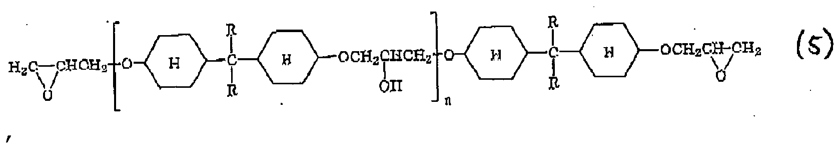 wobei n 0 oder eine ganze Zahl von 1 bis 10 ist, R für ein Wasserstoffatom oder eine Methylgruppe steht und die R in der Formel (5) gleich oder voneinander verschieden sein können.

3. Kationisch photopolymerisierbare Zusammensetzung nach Anspruch 1, wobei die Glasfaser (D) eine Faserlänge von 5 bis 100 µm und einen Faserdurchmesser von 1 bis 20 µm aufweist.

4. Kationisch photopolymerisierbare Zusammensetzung nach Anspruch 1, wobei die Glasfaser (D) mit einer Silanverbindung mit einer Vinylgruppe, einer Epoxygruppe, einer Aminogruppe, einer (Meth)acrylgruppe, einer Mercaptogruppe, einer Methoxygruppe oder einer Ethoxygruppe oberflächenbehandelt ist.

5. Kationisch photopolymerisierbare Zusammensetzung nach Anspruch 1, die weiterhin 0,5 bis 50 Gewichtsteile eines Polyols mit mindestens 2 Hydroxygruppen in einem Molekül davon bezogen auf 100 Gewichtsteile der kationisch polymerisierbaren Verbindung (A) umfasst.

## Revendications

1. Composition photopolymérisable par voie cationique comprenant comme composants principaux de celle-ci les composants (A) à (D) suivants :
(A) 100 parties en poids d'un composé polymérisable par voie cationique comprenant 5 % ou plus en poids d'une résine époxyde bisphénolique hydrogénée ;
(B) 0,01 à 10 parties en poids d'un ou plusieurs sels d'iodonium représentés par la formule (1) suivante, 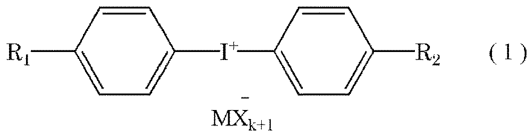 dans laquelle
R₁ et R₂ sont chacun un atome d'hydrogène, un groupe alkyle ayant 1 à 18 atomes de carbone ou un groupe alcoxy ayant 1 à 18 atomes de carbone ;
M est un métal et de préférence le phosphore ;
X est un atome d'halogène et de préférence un atome de fluor ; et
k représente la valence du métal ;
(C) 0,01 à 10 parties en poids d'un ou plusieurs composés de benzoyle ayant l'une quelconque des structures représentées par les formules générales (2), (3) et (4) suivantes, 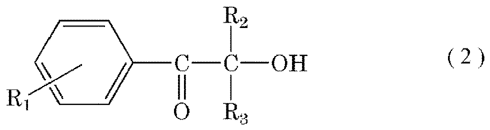 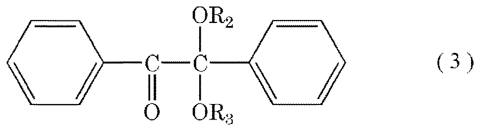 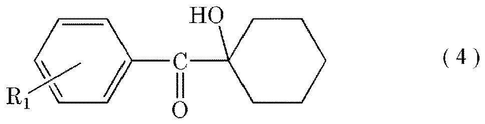 dans lesquelles
R₁ représente un atome d'hydrogène, un groupe méthyle, un groupe éthyle, un groupe alkyle ayant 3 ou plus de 3 atomes de carbone, un groupe hydroxy, un groupe hydroxyméthoxy, un groupe hydroxyéthoxy ou un groupe hydroxyalcoxy ayant 3 ou plus de 3 atomes de carbone ; et
R₂ et R₃ représentent chacun un groupe méthyle, un groupe éthyle ou un groupe alkyle ayant 3 ou plus de 3 atomes de carbone ; et
(D) 10 à 90 parties en poids d'une fibre de verre ayant une longueur de fibre de 1 à 500 µm et un diamètre de fibre de 0,5 à 100 µm.

2. Composition photopolymérisable par voie cationique selon la revendication 1, dans laquelle la résine époxyde bisphénolique hydrogénée est représentée par la formule (5) suivante : 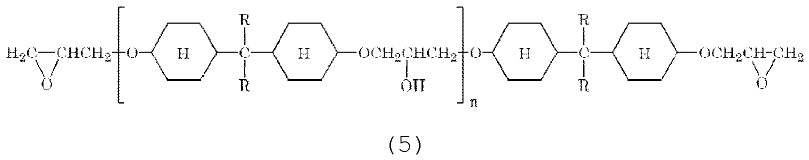 dans laquelle
n est 0 ou un nombre entier de 1 à 10,
R représente un atome d'hydrogène ou un groupe méthyle et
les R dans la formule (5) peuvent être les mêmes ou différents les uns des autres.

3. Composition photopolymérisable par voie cationique selon la revendication 1, dans laquelle la fibre de verre (D) a une longueur de fibre de 5 à 100 µm et un diamètre de fibre de 1 à 20 µm.

4. Composition photopolymérisable par voie cationique selon la revendication 1, dans laquelle la fibre de verre (D) est traitée en surface avec un composé silane ayant un groupe vinyle, un groupe époxy, un groupe amino, un groupe (méth)acrylique, un groupe mercapto, un groupe méthoxy ou un groupe éthoxy.

5. Composition photopolymérisable par voie cationique selon la revendication 1, comprenant en outre 0,5 à 50 parties en poids d'un polyol ayant au moins 2 groupes hydroxy dans une molécule de celui-ci pour 100 parties en poids du composé polymérisable par voie cationique (A).
